# EUROPEAN PATENT SPECIFICATION

(11) **EP 3 049 710 B1**
(45) Date of publication and mention of the grant of the patent: **24.06.2020**
(21) Application number: 14809991.4
(22) Date of filing: 19.09.2014
(51) Int. Cl.: F17C 1/06

(54) **CYLINDER FOR COMPRESSED FLUIDS**
ZYLINDER FÜR KOMPRIMIERTE FLUIDE
CYLINDRE POUR FLUIDES COMPRIMÉS

(30) Priority: 23.09.2013 IT RM20130524
(43) Date of publication of application: 03.08.2016
(73) Proprietor: Desma s.r.l., 66034 Lanciano (CH) (IT)
(72) Inventor: DI CRISCI, Filippo, I-66054 Vasto (CH) (IT)
(74) Representative: Bellomia, Paolo
(86) International application number: PCT/IT2014/000253
(87) International publication number: WO 2015/040648

(56) References cited:
- EP-A1- 0 596 690
- WO-A1-03/054441
- DE-A1-102009 024 794
- US-A- 1 998 629
- US-A- 3 031 099
- US-A- 4 783 232

## Description

This invention relates to a cylinder for compressed fluids.

More specifically, this invention relates to a cylinder for compressed fluids used in the sanitary and medical fields, as a storage component in civil and industrial firefighting plants and systems, for applications in the civil and transport sectors (in particular on trains, ships or aircraft) operating with compressed air or with different gaseous substances suitably mixed (for example, braking systems or air treatment systems "HVAC"). The cylinder for compressed fluids according to this invention is used, for example, also for propulsion systems for motor vehicles, in particular for systems equipped with mixed fuel supply (for example, petrol/methane) or fuel supply of the hybrid type (for example, hydrogen/electricity).

Moreover, this invention is advantageously used as a tank for storing high pressure compressed fluids used in the propulsion of space rockets and space vehicles in general.

In prior art solutions, the high pressure cylinders are made of steel or aluminium according to various production processes depending on the mechanical properties of the metal selected, the chemical-physical properties of the fluid contained and the pressures for storing the fluid itself, as well as the cost of the production process up to the end product.

In the prior art, the high pressure cylinder of a metallic type comprises a central cylindrical section closed at the ends by two hemispherical caps welded on the central cylindrical section.

This solution represents the more economical version but less efficient in terms of maximum pressure value which can be reached (usually approximately 30 bar) and, therefore, also in terms of volume of fluid which can be stored and used with a cylinder of this type.

According to the state of the art, welded high pressure cylinders are used to store fuel gas such as, for example, liquefied petroleum gas, better known as LPG, which is the by-product of refining crude oil. The above-mentioned cylinders are usually installed on board motor vehicles which have propulsion systems with mixed fuel supply of the petrol/LPG type.

Alternatively, there are prior art high pressure cylinders without welding. This version of the high pressure cylinder requires a production process involving a series of forming steps for drawing a metallic, plate-like, semifinished product until reaching the predetermined shape, generally of a cylindrical type, with two hemispherical end portions for closing.

In this case, the production process of the pressurised cylinder, also called "seamless" cylinder, makes it possible to create a cylinder without welding, which generally represents a weak point of the structure. For this reason, the "seamless" cylinder version is generally safer and more efficient, whilst being more expensive than a traditional welded cylinder.

The cylinders made with the "seamless" technique already have on at least one end threaded connectors for fitting dispensers and/or opening valves, in exactly the same as on the welded metallic cylinders. The performance in terms of maximum pressure with the "seamless" cylinders is approximately 10 times greater compared with welded metallic cylinders, in other words this means that the maximum operating pressure value is, for example, approximately 200-300 bar.

The prior art high pressure cylinders have some drawbacks.

Mainly, the high pressure cylinders of a metallic type, in the welded or "seamless" embodiment, have a structural weight (meaning the empty weight of the cylinder) which represents a significant percentage of the total weight which comprises the weight of the compressed fluid and that of the storage cylinder.

The weight of the filled cylinder must be taken into consideration in every application, above all in installations or applications where the total weight requirements are included in the design specification.

In addition, prior art high pressure metallic cylinders are subject to serious corrosion problems, both outside and inside. Even the use of special metal alloys, for example a predetermined type of aluminium, does not avoid the effects of corrosion, which can even be serious, and there is therefore the actual risk of an explosion of the cylinder when it is seriously damaged by the corrosion.

For example, the compressing and storing of a gas such as pure oxygen subjects the inner walls of the high pressure cylinder to a corrosion which is five times faster than that with atmospheric air.

In addition to a possible chemical aggressiveness of the compressed fluid in the cylinder, it is also necessary to add the effect of steam condensation both on the inside and outside of the cylinder which there may be in the presence of significant changes in pressure (filling/emptying of the cylinder) and temperature (cyclical exposure between sun and shade or on account of the vicinity of direct sources of heat).

The prior art high pressure cylinders are subject to another drawback, in particular the metallic welded cylinders have large dimensions especially in proportion to the volume, in litres, of fluid included therein.

In other words, due to the maximum operating pressure, a prior art metallic welded cylinder can store a low quantity of compressed fluid. For this reason, if a metallic cylinder is used, for example, on a motor vehicle with a propulsion system using a mixed fuel supply of the petrol/LPG type, this raises the problem of the considerable space occupied by the cylinder, generally in the luggage compartment, compared with the relative low autonomy enjoyed by the driver of the vehicle in terms of distance which may be travelled.

In particular, documents WO 03/054441, EP0596690 and US 1998629 describe a cylinder for the containment of compressed fluids. Documents US4783232, US3031099 and DE102009024794 describe a general method for the production of a cylinder for high pressure compressed fluids.

In this context, the technical purpose which forms the basis of this invention is to provide a cylinder for compressed fluids that overcomes the above mentioned drawbacks of the prior art.

More specifically, the aim of this invention is to provide a cylinder for compressed fluids which is simultaneously light and sturdy, in particular which provides a good capacity for storage of a compressed fluid with a lightweight structure which is, therefore, easier to move by a user and/or installation technician.

Another aim of this invention is to provide a cylinder for compressed fluids which is free of the above-mentioned corrosion effects and is therefore safer and free from periodic control and maintenance activities.

The aim specified is substantially achieved by a cylinder for compressed fluids comprising the technical features stated in one or more of the appended claims.

The dependent claims correspond to possible embodiments of the invention.

Further features and advantages of the invention are more apparent in the detailed description below, with reference to a preferred, non-limiting, embodiment of a cylinder for compressed fluid as illustrated in the accompanying drawings, in which:
- Figure 1 is a cross section of a cylinder according to this invention;
- Figure 2 is a cross section of an enlarged detail of the cylinder of Figure 1;
- Figure 3 shows an element used during a step of making the cylinder of Figure 1;
- Figure 4 schematically shows a machine used during a step of making the cylinder of Figure 1;
- Figure 5 schematically shows a different machine used during a step of making the cylinder of Figure 1;

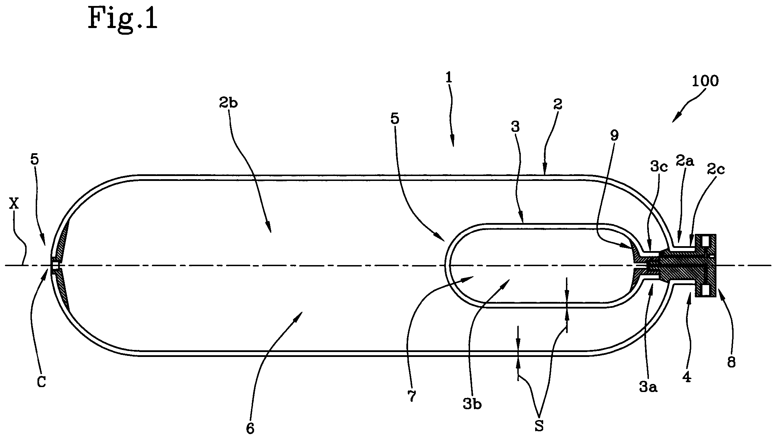

With reference to the annexed Figure 1, the numeral 1 denotes a cylinder for compressed fluids according to this invention.

The cylinder 1 for compressed fluids comprises a first hollow body 2 and at least one second hollow body 3 equipped with an opening 2a and 3a, respectively, towards the outside 100.

The first hollow body 2 forms with a respective inner cavity a first housing space 2b available for a compressed fluid; similarly the second hollow body 3 forms with a respective inner cavity a second housing space 3b.

The first housing space 2b is distinct and different from the second housing space 3b, preferably the first housing space 2b has a capacity different to the capacity of the second housing space 3b.

Preferably, the first hollow body 2 and the second hollow body 3 have an axially symmetrical shape, still more preferably they have the respective axes coincident in a single axis "X", yet more preferably the hollow bodies 2, 3 are such as to extend along the above-mentioned axis "X" with a cylindrical in shape.

The first hollow body 2 and the second hollow body 3 extend along the axis "X" and are interposed between a head end 4 and a bottom end 5, opposite the head end 4.

Preferably, the first hollow body 2 has the relative opening 2a towards the outside 100 at the head end 4.

Preferably, the second hollow body 3 has the relative opening 3a towards the outside 100 at the head end 4.

Preferably, the first hollow body 2 and the second hollow body 3 at the relative openings 2a, 3a have a head portion with an ogival shape, in particular hemispherical having in a central position an open connecting neck, respectively a first connecting collar 2c for the first hollow body 2 and a second connecting collar 3c for the second hollow body 3.

The cylinder 1 for compressed fluids according to this invention comprises the second hollow body 3 housed inside the first hollow body 2 in such a way as to occupy at least partly the first housing space 2b with the relative external space.

Preferably, the second hollow body 3 is housed inside the first hollow body 2 in such a way as to define a first chamber 6 for housing the compressed fluids having as a space at least the first housing space 2b less at least the external space of the second hollow body 3 and a second chamber 7 for housing the compressed fluids having as a space at least the second housing space 3b.

The first housing chamber 6 is insulated from the second housing chamber 7, in other words, there is no fluid communication between the first housing chamber 6 and the second housing chamber 7 for compressed fluids due to the presence of the wall of the hollow bodies 2, 3.

The first housing chamber 6 and the second housing chamber 7 have respective openings 2a and 3a towards the outside 100.

Preferably, in accordance with the preferred, non-limiting embodiment of this invention, the first housing chamber 6 and the second housing chamber 7 have the openings 2a, 3a towards the outside 100 at the same head end 4.

At the bottom end 5 the first hollow body 2 has a closing portion with an ogival shape, in particular hemispherical, on which preferably there is a bottom opening "C" such as to place in fluid communication the first housing space 2b with the outside 100. Preferably, the bottom opening "C" of the first hollow body 2 at least in a condition of use of the cylinder 1 is normally closed.

At the bottom end 5 the second hollow body 3 has a closing portion with an ogival shape, in particular hemispherical, preferably without any type of opening.

In a different embodiment of the cylinder 1 according to this invention, not illustrated in the accompanying drawings, the second hollow body 3 has a bottom opening at the bottom end 5 such as to place in fluid communication the second housing space 3b with the first housing space 2b, or in a different embodiment of this invention, the second hollow body 3 has a bottom opening at the bottom end 5 such as to place in fluid communication the second housing space 3b with the outside 100. Preferably, the wall which delimits the inner cavity respectively of the hollow body 2 and of the hollow body 3 has a wall thickness "S" which is uniform and equal at all points of the extension of the first hollow body 2 and the second hollow body 3.

In a different embodiment of the cylinder 1 and fully covered in the scope of the invention, not illustrated in the accompanying drawings, the first hollow body 2 and the second hollow body 3 may have, for example, a spherical shape or another shape and a thickness of the wall which is, for example, not uniform, that is, variable along the extension of the wall.

Preferably, the first housing chamber 6 and the second housing chamber 7 are placed in fluid communication with the outside 100 with the respective openings 2a and 3a of the first hollow body 2 and the second hollow body 3.

Preferably, the first hollow body 2 and the second hollow body 3 are connected to a single connecting body 8, at the respective openings 2a and 3a.

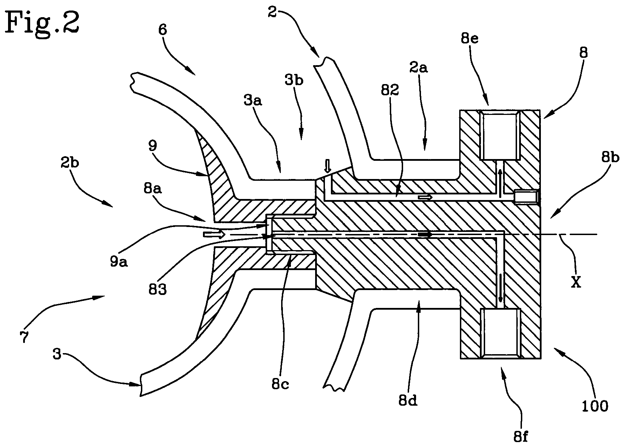

With reference to the detail shown in Figure 2, the connecting body 8 comprises a coupling portion 8a designed for connecting with the hollow bodies 2, 3 and the opposite shaped portion 8b.

Preferably, the coupling portion 8a of the connecting body 8 has at least one threaded end 8c for fixing the connecting body 8 to the second hollow body 3 at the opening 3a and at least a sleeve portion 8d on which is fixed the connecting collar 2c of the first hollow body 2 at the opening 2a.

Thus, the connecting body 8 is such that, once the connecting bodies 2, 3 have been fixed on it, respectively by means of the connecting collar 2c and the threaded end 8c, it keeps in position the first hollow body 2 and the second hollow body 3 with the respective axes of symmetry coinciding with the above-mentioned axis "X". The connecting body 8 is preferably aligned along the axis "X" in a condition of use of the cylinder 1.

Preferably, the shaped portion 8b comprises at least two connecting seats: a first connecting seat 8e and a second connecting seat 8f for dispensing at least one pressurised fluid from the cylinder 1.

More specifically, the connecting body 8 has inside it at least a first dispensing conduit 82 and a second dispensing conduit 83 which extend, respectively, between a coupling portion 8a of the connecting body 8 up to the respective first connecting seat 8e and second connecting seat 8f, preferably positioned opposite one another.

Preferably, the first dispensing conduit 82 extends from a lateral surface of the sleeve portion 8d facing the first housing chamber 6 to the shaped portion 8b, towards the outside 100.

Preferably, the second dispensing conduit 83 extends from the threaded end 8c of the connecting body and facing the second housing chamber 7 to the shaped portion 8b, towards the outside 100.

Preferably, the first dispensing conduit 82 faces the outside 100 at a bottom wall of the first connecting seat 8e whilst the second dispensing conduit 83 faces the outside 100 at a bottom wall of the second connecting seat 8f.

Advantageously, the first dispensing conduit 82 is such as to place in fluid connection the first housing chamber 6 with the outside environment 100 and the dispensing conduit 83 is such as to place in fluid connection the first housing chamber 7 with the outside environment 100.

In other words, the connecting body 8 allows the escape of a fluid contained in the first housing chamber 6 and/or of a fluid contained in the second housing chamber 7 towards the outside environment 100 independently.

For this reason, the first 6 and second 7 housing chambers are separate and insulated from each other, and such as to house fluids under pressure of different chemical-physical types which can be dispensed independently and in conditions of use of the cylinder 1 which are different and/or independent from each other.

More in detail, the wall thickness "s" of the cylinder 1 in particular of the second hollow body 3 has values such that there is no interference and/or collision between the outer wall of the second hollow body 3 with the inner cavity of the first hollow body 2.

For example, in a condition of use of the cylinder 1 there may be dispensing of a pressurised fluid contained in the first housing chamber 6 through the first dispensing conduit 82 up to the complete emptying of the first chamber 6, whilst the fluid housed in the second chamber 7 is dispensed through the second dispensing conduit 83 only afterwards.

In a different use condition of the cylinder 1 according to this invention, the cylinder 1 for compressed fluids may be connected to a propulsion unit, for example, a rocket engine, which requires simultaneous feeding a fuel fluid (hydrogen) and a comburent fluid (oxygen) to create the combustion reaction also in empty space.

In effect, both the fuel and the comburent are stored in suitable tanks (at least two and different from each) which are particularly spacious and installed together on a single propulsion unit equipped with a special combustion chamber followed by an expansion nozzle.

For this reason, the dispensing of the comburent and fuel occurs through the first 82 and second 83 dispensing conduits with specific pressure and flow rate values for the type of combustion characterising the propulsion unit.

Preferably, the different capacity between the first housing chamber 6 and the second chamber housing 7 makes it possible to manage, for example, the storage of the two fluids in the cylinder 1 as a function of the quantity required for each fluid in the chemical reaction in question, in such a way that it is balanced in an optimum fashion.

Preferably, the first connecting seat 8e and second connecting seat 8f comprise a thread for connecting to a conduit of a system or to a coupling of a dispenser of fluids under pressure.

Preferably, the threaded end 8c of the connecting body 8 has a size of the outside diameter which is less than the size of the outside diameter of the sleeved portion 8d.

Preferably, the dimension of the connecting body along the extension of the axis "X" at least includes the length of extension of the connecting collar 2c and of the connecting collar 3c, respectively, of the two hollow bodies 2, 3 and of the dimension of the first connecting seat 8e and second connecting seat 8f.

Preferably, the connecting body 8 is made of a resistant material such as, for example, a metal, preferably stainless steel, titanium or a lightweight alloy for high pressures.

Preferably, at least the second hollow body 3 has at the opening 3a a connecting collar 9, having a through hole 9a at least partly threaded. The connecting collar 9 is included in the housing space 3b of the second hollow body 3 in such a way that the through hole 9a allows the above-mentioned fluid communication to be made.

More specifically, the connection between the second hollow body 3 and the connecting body 8 is possible by screwing between the thread of the through hole 9a with the thread of the threaded end 8c, such a coupling also guaranteeing a tight seal of the fluids under pressure.

Preferably, the connecting collar 9 is made of a metallic material, for example stainless steel, titanium or a lightweight alloy for high pressures.

Preferably, the first hollow body 2 and the second hollow body 3 are made of a composite material, that is to say, of a material comprising a fibrous material impregnated with a resin.

In a different embodiment not described, but in any case covered in the scope of the invention, the first hollow body 2 and the second hollow body 3 are made of a metallic material or plastic, for example obtained by moulding or die casting or mechanical processing.

Preferably, the reinforcement of the composite material is a thread made of carbon, or a mixed textile thread made of carbon and Kevlar.

Still more preferably, depending on the particular constructional requirements of the cylinder 1, which are described in more detail below, the reinforcement thread may be of the type comprising a carbon-Kevlar fibre and/or the type comprising glass fibre. In other different embodiments, not illustrated and described but falling within the scope of the invention, the reinforcement thread may be made of another material, for example it may be a thread based on aramid fibre or based only on carbon fibre or other fibre.

Preferably, the above-mentioned resin may be a thermoplastic or thermosetting polymer resin, still more preferably, the resin is thermosetting of the epoxy type.

The fibrous component of the composite material, that is, the thread, represents the reinforcement whilst the resin component represents the matrix of the composite material.

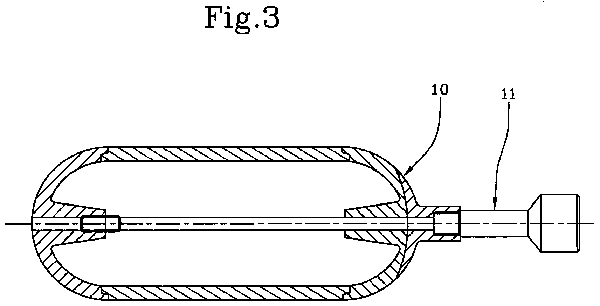

Preferably, the process for making the cylinder 1 comprises a step of impregnating the fibrous material made of carbon-Kevlar and/or glass fibre with the epoxy resin before its installation on a die 10, shown in detail in figure 3. The die 10 is preferably metallic, still more preferably tin-based.

Preferably, the metal die 10 is assembled in separate pieces which reproduce the shape of the inner cavity of the first hollow body 2 and the second hollow body 3, with different geometries and measurements suitable for the housing capacity provided for the first housing space 2b and for the second housing space 3b.

The metal die 10 is fixed on a supporting shaft 11 as shown in Figure 3 and which is used in the production process to move the cylinder 1 during the various production steps.

Preferably, the wall thickness "S" is proportional to the maximum operating pressure of the cylinder for compressed fluids 1 as well as to the strength characteristics of the composite material from which the walls are made.

The making of the first hollow body 2 and the second hollow body 3 from composite material mentioned above comprises the use of a spinning machine 200.

The spinning machine 200 illustrated in the accompanying drawings is shown schematically with a schematic view of non-limiting embodiment according to this invention.

In other words, the spinning machine 200 may comprise further accessory elements not illustrated and described which do not limit the inventive concept of the invention.

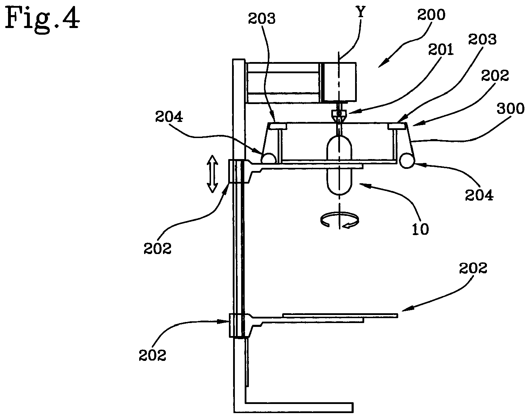

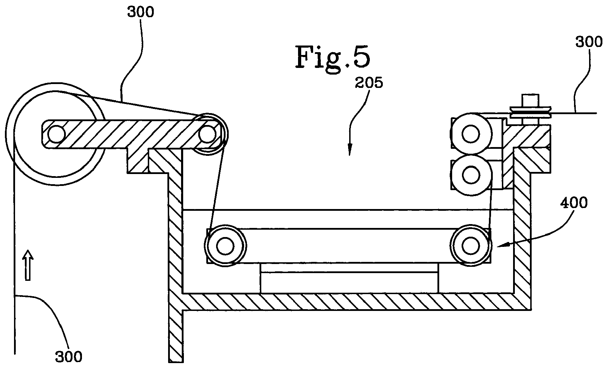

With reference to Figures 4 and 5, the spinning machine 200 comprises:
- a spindle 201 for pulling a metal die 10 using a shaft 11 along an axis of rotation "Y" of the spindle; Preferably, during the rotation of the metal die 10 on the spindle 201, the axis "X" of symmetry of the cylinder 1 coincides with the axis of rotation "Y" of the spindle 201;
- at least one spinner 202 of a thread 300 of fibrous material such as to move at least one relative portion with guide passages 203 of the thread alternately along at least one direction parallel to the axis of rotation "Y" for spinning the thread about the metal die 10;
- at least one spool 204 of the thread 300 of fibrous material such as to cross the guide passages 203 of the spinner 202;

Preferably, with reference to Figure 5, the spinning machine 200 also comprises an apparatus 205 for impregnating the thread 300 of fibrous material with a resin 400 in such a way as to make a composite material for the spinning about the metal die 10.

Preferably, the movable parts of the spinning machine 200, for example the spindle 201 and the spinner 202, are managed by an electronic system which comprises motors of the brushless type connected to drives controlled by an industrial controller of the PLC type.

The software program for controlling the PLC controller can be adapted each time on the basis of production specifications for the cylinder 1, that is to say, dimensions, capacity, wall thickness, structural rigidity of finished composite material, and so on.

According to this invention, the method for making a cylinder 1 for high pressure compressed fluids as described above comprises:
- preparing at least two metal dies 10, respectively a first metal die for the first hollow body 2 and a second metal for the second hollow body 3. The metal die has dimensions greater than the second metal die;
- preparing a spinning machine 200 preferably as described above;
- if necessary covering the outer surface of the second metal die 10 of the second hollow body 3 with a covering material such as to define the inner wall of the cavity of the second housing chamber 7;
- making with a composite material, preferably as described above, the second hollow body 3 by spinning the thread 300 of fibrous material about the second metal die 10 and if necessary including in the structure at the opening 3a a connecting collar 9;
- removing from the spindle 201 of the spinning machine 200 the second metal die 10 covered by the second finished hollow body 3;
- preparing a step of treating the assembly of the second metal die 10 and second hollow body 3 preferably in an autoclave at a temperature such as to exceed the melting point of the material of the second metal die 10 and for a predetermined time sufficient for polymerising the resin 400 and with a pressure such as to compress every layer of thread 300 of fibrous material soaked with the resin 400;
- extracting the second metal die 10 from the inner cavity of the second hollow body 3 through the relative opening 3a towards the outside 100 when the second metal die 10 has adopted the liquid state as a result of the temperature in the autoclave;
- if necessary covering the outer surface of the second hollow body 3 with a covering material such as to define the outer wall of the second hollow body 3;
- if necessary mounting on the second hollow body 3 a connecting body 8 at the opening 3a towards the outside 100;
- preparing a larger first metal die 10 preferably fixed axially on the connecting body 8 and outside the second hollow body; In other words the first metal die 10 is larger and includes in its internal hollow space the second hollow body 3 previously made;
- preparing again the spinning machine 200 preferably as previously illustrated;
- if necessary covering the outer surface of the first metal die 10 with a covering material such as to define the inner wall of the cavity of the first housing chamber 6;
- making with a composite material, preferably as described above, the first hollow body 2 by spinning the thread 300 of fibrous material about the first metal die 10;
- removing from the spindle 201 of the spinning machine 200 the first metal die 10 covered by the first hollow body 2;
- preparing a step of treating the assembly of the first metal die 10, second hollow body 3 and first hollow body 2 preferably in an autoclave at a temperature such as to exceed the melting point of the material of the first metal die 10 and for a predetermined time sufficient for polymerising the resin 400 and with a pressure such as to compress every layer of thread 300 of fibrous material soaked with the resin 400;
- extracting the first metal die 10 from the inner cavity of the first hollow body 2 through a bottom opening "C" towards the outside 100 when the first metal die 10 has adopted the liquid state;
- if necessary covering the outer surface of the first hollow body 2 with a covering material such as to define the outer wall of a cylinder 1 for compressed fluids;
- if necessary applying on the outer surface of the cylinder 1 for compressed fluids identification elements which are visible and/or traceable using electronic devices showing the nameplate data of the cylinder 1;
- if necessary covering the outer surface of the cylinder 1 for compressed fluids with a covering material such as to define the outer wall of the cylinder 1 for compressed fluids.

Preferably, the above-mentioned covering material is a gel-coat sensitive to UV rays for being treated in an efficient fashion during the hardening and drying step and also having high level properties such as moisture barrier.

In a different embodiment not illustrated, the cylinder 1 for compressed fluids may comprise what is indicated above except for the following elements: the second hollow body 3 and relative connecting collar 9, the second dispensing conduit 83 and the respective second connecting seat 8f.

For this reason, during production there is no step for making the second hollow body 3 and the process starts with the preparation of the spinning machine 200 for making the first hollow body 2.

Advantageously, the cylinder 1 according to this invention has the capacity of storing in a single structural body at least two different compressed fluids.

Advantageously, the structure of the cylinder 1 has a very reduced weight when empty allowing an easy movement during installation and/or storage and transport.

Advantageously, thanks to a simple and effective production process, the number of components assembled at a later stage are also reduced to a minimum, after the hollow bodies 2, 3 have been made.

The possibility of fitting the connecting body 8 during the production process of the cylinder 1 directly on the connecting collar 3c of the second hollow body 3 allows the time for production of the cylinder 1 to be considerably reduced and especially avoids the need to insert seals ("O-Ring" and the like) which are generally subject to regular maintenance and replacement as they are easily perishable.

Preferably, during the steps of making the cylinder 1 a separation material may be inserted between a layer of thread 300 and a succession of the first hollow body 2 and/or the second hollow body 3. More specifically, the above-mentioned separating material may be a plastic material or a material of another nature and may be inserted preferably in the cylindrical portion of the cylinder 1 to increase the insulation of the inner space external humidity.

Advantageously, the optimisation of the housing spaces 2b, 3b where the second is contained in the first gives the cylinder 1 outside dimensions and geometry which can be better used in the case of transport, installation and handling.

Advantageously, the cylinder 1 according to this invention is not subject to corrosion (inside and outside) and the cylinder 1 is thus free of regular checks and maintenance. In other words, the cylinder 1 made of composite material does not require checks and tests of the seals (apart from those planned close to the connecting seats 8e, 8f) and inspections of the welding or zones most stressed mechanically during use of the cylinder 1 for pressurised fluids.

## Claims

1. A cylinder (1) for high pressure compressed fluids, comprising:
- a first hollow body (2) having an opening (2a) towards the outside (100) and such as to define with the relative internal cavity a first housing space (2b) for a compressed fluid;
- at least one second hollow body (3) having an opening (3a) towards the outside (100) and such as to define with the relative internal cavity a second housing space (3b) separate and different from the first housing space (2b) for a compressed fluid;
wherein the second hollow body (3) is housed inside the first hollow body (2) in such a way as to define a first chamber (6) for housing the compressed fluids having as a space at least the first housing space (2b) less the external space of the second hollow body (3) and a second chamber (7) for housing the compressed fluids having as a space the second housing space (3b), the first housing chamber (6) being isolated from the second housing chamber (7) and vice versa,
wherein the first housing chamber (6) and the second housing chamber (7) have, respectively, an opening (2a, 3a) towards the outside (100) at a same head end (4) of the cylinder (1) for compressed fluids and **characterised in that** at least one of the first hollow body (2) and the second hollow body (3) have at a bottom end (5) opposite the head end (4) a bottom opening ("C") made on the first hollow body (2) and such as to be normally closed in a condition of use of the cylinder (1).

2. The cylinder (1) for compressed fluids according to claim 1, wherein the first hollow body (2) and the second hollow body (3) are axisymmetric in shape and are aligned relative to a same axis ("X").

3. The cylinder (1) for compressed fluids according to claim 1, wherein the first hollow body (2) and the second hollow body (3) are connected to a single connecting body (8), the connecting body (8) is fixed on the cylinder (1) for compressed fluids at the respective openings (2a, 3a) of the first hollow body (2) and second hollow body (3) towards the outside (100).

4. The cylinder (1) for compressed fluids according to claim 1, wherein at least one of the first hollow body (2) and the second hollow body (3) are made of a composite material, preferably the composite material comprising a thread (300) of fibrous material and a resin (400).

5. The cylinder (1) for compressed fluids according to claim 4, wherein the fibrous material comprises a continuous thread (300) of glass fibre and/or at least one thread selected between carbon and/or Kevlar.

6. The cylinder (1) for compressed fluids according to claim 1, wherein the first hollow body (2) and the second hollow body (3) have a wall thickness ("S") which is at least a function of the maximum pressure of the fluid compressible inside the first hollow chamber (6) and the second housing chamber (7).

7. The cylinder (1) for compressed fluids according to claim 3, wherein the connecting body (8) comprises internally at least a first dispensing conduit (82) and a second dispensing conduit (83) having separate paths and such as to place in fluid communication, respectively, the first housing chamber (6) and the second housing chamber (7) of the cylinder (1) with the outside (100).

8. A method for making a cylinder (1) for high pressure compressed fluids according to claim 1, comprising:
- preparing at least two metal dies (10), a first metal die being configured for making the first hollow body (2), a second die being configured for making the second hollow body (3), the first metal die having larger dimensions than the second metal die (10);
- preparing a spinning machine (200);
- making the second hollow body (3) by spinning a thread (300) of fibrous material about the second metal die (10);
- removing from a spindle (201) of the spinning machine (200) the second metal die (10) covered by the second hollow body (3);
- preparing a step of treating the assembly of the second metal die (10) and second hollow body (3) preferably in an autoclave at a temperature such as to exceed the melting point of the material of the second metal die (10) and for a predetermined time sufficient for polymerising the resin (400) and with a pressure such as to compress every layer of thread (300) of fibrous material soaked with the resin (400);
- extracting the second metal die (10) from the inner cavity of the second hollow body (3) through a relative opening (3a) towards the outside (100) when the second metal die (10) has adopted the liquid state;
- preparing the first metal die (10) preferably fixed axially on a connecting body (8) of the second hollow body (3) and outside the second hollow body (3);
- preparing a spinning machine (200);
- making the first hollow body (2) by spinning the thread (300) of fibrous material about the first metal die (10);
- removing from the spindle (201) of the spinning machine (200) the first metal die (10) covered by the first hollow body (2);
- preparing a step of treating the assembly of the first metal die (10), second hollow body (3) and first hollow body (2) preferably in an autoclave at a temperature such as to exceed the melting point of the material of the first metal die (10) and for a predetermined time sufficient for polymerising the resin (400) and with a pressure such as to compress every layer of thread (300) of fibrous material soaked with the resin (400);
- extracting the first metal die (10) from the inner cavity of the first hollow body (2) through a bottom opening ("C") towards the outside (100) when the first metal die (10) has adopted the liquid state;

9. The method according to claim 8, comprising one or more of the following steps:
- covering the outer surface of the second metal die (10) configured for making the second hollow body (3) with a covering material such as to define the inner wall of the cavity of the second housing chamber (7) for the compressed fluids;
- covering the outer surface of the second hollow body (3) with a covering material such as to define the outer wall of the second hollow body (3), before making the second hollow body (2);
- mounting on the second hollow body (3) a connecting body (8) at the opening (3a) towards the outside (100) preferably the connecting body (8) being screwed on a connecting collar (9) of the second hollow body (3) by a threaded end (8c), before making the first hollow body (2);
- covering the outer surface of the first metal die (10) with a covering material such as to define the inner wall of the cavity of the first housing chamber (6) for the compressed fluids;
- covering the outer surface of the first hollow body (2) with a covering material such as to define the outer wall of a cylinder (1) for compressed fluids;
- applying on the outer surface of the cylinder (1) for compressed fluids identification elements which are visible and/or traceable using electronic devices showing the nameplate data of the cylinder (1);
- covering the outer surface of the cylinder (1) for compressed fluids with a covering material such as to define the outer wall of the cylinder (1) for compressed fluids.

10. The method according to claim 8 or 9, wherein the metal dies (10) are made from a metal material, preferably a tin-based alloy.

11. The method according to any one of claims 8 to 10, wherein the composite material comprises a thread (300) of fibrous material and a resin (400).

12. The method according to any one of claims 8 to 11, wherein the fibrous material comprises a continuous thread (300) of glass fibre and/or at least one thread selected between carbon and/or Kevlar.

## Patentansprüche

1. Zylinder (1) für komprimierte Hochdruckfluide, umfassend:
- einen ersten Hohlkörper (2) aufweisend eine Öffnung (2a) nach außen (100) und derart, dass mit dem relativen inneren Hohlraum ein erster Aufnahmeraum (2b) für ein komprimiertes Fluid definiert wird;
- mindestens einen zweiten Hohlkörper (3) aufweisend eine Öffnung (3a) nach außen (100) und derart, dass mit dem relativen inneren Hohlraum ein zweiter Aufnahmeraum (3b) definiert wird, der vom ersten Aufnahmeraum (2b) für ein komprimiertes Fluid getrennt und verschieden ist;
wobei der zweite Hohlkörper (3) in dem ersten Hohlkörper (2) derart aufgenommen ist, dass eine erste Kammer (6) zum Aufnehmen der komprimierten Fluide definiert wird, deren Raum mindestens der erste Aufnahmeraum (2b) ohne den Außenraum des zweiten Hohlkörpers (3) ist und eine zweite Kammer (7) zum Aufnehmen der komprimierten Fluide, deren Raum der zweite Aufnahmeraum (3b) ist, wobei die erste Aufnahmekammer (6) von der zweiten Aufnahmekammer (7) und umgekehrt isoliert ist,
wobei die erste Aufnahmekammer (6) und die zweite Aufnahmekammer (7) jeweils eine Öffnung (2a, 3a) nach außen (100) an demselben Kopfende (4) des Zylinders (1) für komprimierte Fluide aufweisen und **dadurch gekennzeichnet, dass** mindestens einer zwischen dem ersten Hohlkörper (2) und dem zweiten Hohlkörper (3) an einem unteren Ende (5) gegenüber dem Kopfende (4) eine am ersten Hohlkörper (2) ausgebildete untere Öffnung ("C") aufweist und um unter einer Bedingung von Verwendung des Zylinders (1) normalerweise geschlossen zu sein.

2. Zylinder (1) für komprimierte Fluide nach Anspruch 1, wobei der erste Hohlkörper (2) und der zweite Hohlkörper (3) eine achsensymmetrische Form aufweisen und relativ zu derselben Achse ("X") ausgerichtet sind.

3. Zylinder (1) für komprimierte Fluide nach Anspruch 1, wobei der erste Hohlkörper (2) und der zweite Hohlkörper (3) mit einem einzigen Verbindungskörper (8) verbunden sind, wobei der Verbindungskörper (8) an dem Zylinder (1) für komprimierte Fluide an den jeweiligen Öffnungen (2a, 3a) des ersten Hohlkörpers (2) und des zweiten Hohlkörpers (3) nach außen (100) befestigt ist.

4. Zylinder (1) für komprimierte Fluide nach Anspruch 1, wobei mindestens einer zwischen dem ersten Hohlkörper (2) und dem zweiten Hohlkörper (3) aus einem Verbundmaterial, vorzugsweise dem Verbundmaterial, umfassend einen Faden (300) aus Fasermaterial und einem Harz (400), besteht.

5. Zylinder (1) für komprimierte Fluide nach Anspruch 4, wobei das Fasermaterial einen durchgehenden Faden (300) aus Glasfaser und/oder mindestens einen zwischen Kohlenstoff und/oder Kevlar ausgewählten Faden umfasst.

6. Zylinder (1) für komprimierte Fluide nach Anspruch 1, wobei der erste Hohlkörper (2) und der zweite Hohlkörper (3) eine Wandstärke ("S") aufweisen, die mindestens eine Funktion des Maximaldrucks des Fluids ist, das in der ersten Hohlkammer (6) und der zweiten Aufnahmekammer (7) komprimierbar ist.

7. Zylinder (1) für komprimierte Fluide nach Anspruch 3, wobei der Verbindungskörper (8) intern mindestens eine erste Abgabeleitung (82) und eine zweite Abgabeleitung (83) mit getrennten Wegen umfasst und um jeweils die erste Aufnahmekammer (6) und die zweite Aufnahmekammer (7) des Zylinders (1) mit der Außenseite (100) in Fluidkommunikation zu bringen.

8. Verfahren zur Herstellung eines Zylinders (1) für komprimierte Hochdruckfluide nach Anspruch 1, umfassend:
- Vorbereiten von mindestens zwei Metallformen (10), wobei eine erste Metallform zur Herstellung des ersten Hohlkörpers (2) konfiguriert ist, wobei eine zweite Form zur Herstellung des zweiten Hohlkörpers (3) konfiguriert ist, wobei die erste Metallform größere Abmessungen als die zweite Metallform (10) aufweist;
- Vorbereiten einer Spinnmaschine (200);
- Herstellen des zweiten Hohlkörpers (3) durch Spinnen eines Fadens (300) aus Fasermaterial um die zweite Metallform (10);
- Entfernen der zweiten Metallform (10), die von dem zweiten Hohlkörper (3) bedeckt ist, von einer Spindel (201) der Spinnmaschine (200);
- Vorbereiten eines Schritts zum Behandeln der Anordnung der zweiten Metallform (10) und des zweiten Hohlkörpers (3) vorzugsweise in einem Autoklav bei einer Temperatur, die den Schmelzpunkt des Materials der zweiten Metallform (10) überschreitet und für eine vorbestimmte Zeit, die zum Polymerisieren des Harzes (400) ausreicht, und mit einem Druck, um jede mit dem Harz (400) getränkte Fadenschicht (300) aus Fasermaterial zu komprimieren;
- Herausziehen der zweiten Metallform (10) aus dem inneren Hohlraum des zweiten Hohlkörpers (3) durch eine relative Öffnung (3a) nach außen (100), wenn die zweite Metallform (10) den flüssigen Zustand eingenommen hat;
- Vorbereiten der ersten Metallform (10), die vorzugsweise axial an einem Verbindungskörper (8) des zweiten Hohlkörpers (3) und außerhalb des zweiten Hohlkörpers (3) befestigt ist;
- Vorbereiten einer Spinnmaschine (200);
- Herstellen des ersten Hohlkörpers (2) durch Spinnen des Fadens (300) aus Fasermaterial um die erste Metallform (10);
- Entfernen der ersten Metallform (10), die von dem ersten Hohlkörper (2) bedeckt ist, von der Spindel (201) der Spinnmaschine (200);
- Vorbereiten eines Schritts zum Behandeln der Anordnung der ersten Metallform (10), des zweiten Hohlkörpers (3) und des ersten Hohlkörpers (2) vorzugsweise in einem Autoklav bei einer Temperatur, die den Schmelzpunkt des Materials der ersten Metallform (10) überschreitet und für eine vorbestimmte Zeit, die zum Polymerisieren des Harzes (400) ausreicht, und mit einem Druck, um jede mit dem Harz (400) getränkte Fadenschicht (300) aus Fasermaterial zu komprimieren;
- Herausziehen der ersten Metallform (10) aus dem inneren Hohlraum des ersten Hohlkörpers (2) durch eine untere Öffnung ("C") nach außen (100), wenn die erste Metallform (10) den flüssigen Zustand eingenommen hat.

9. Verfahren nach Anspruch 8, umfassend einen oder mehrere der folgenden Schritte:
- Abdecken der Außenfläche der zweiten Metallform (10), die zur Herstellung des zweiten Hohlkörpers (3) konfiguriert ist, mit einem Abdeckmaterial, um die Innenwand des Hohlraums der zweiten Aufnahmekammer (7) für die komprimierten Fluide zu definieren;
- Abdecken der Außenfläche des zweiten Hohlkörpers (3) mit einem Abdeckmaterial, um die Außenwand des zweiten Hohlkörpers (3) zu definieren, bevor der zweite Hohlkörper (2) hergestellt wird;
- Montieren eines Verbindungskörpers (8) an der Öffnung (3a) nach außen (100) an dem zweiten Hohlkörper (3), wobei der Verbindungskörper (8) vorzugsweise an einen Verbindungsring (9) des zweiten Hohlkörpers (3) durch ein Gewindeende (8c) angeschraubt ist, bevor der erste Hohlkörper (2) hergestellt wird;
- Abdecken der Außenfläche der ersten Metallform (10) mit einem Abdeckmaterial, um die Innenwand des Hohlraums der ersten Aufnahmekammer (6) für die komprimierten Fluide zu definieren;
- Abdecken der Außenfläche des ersten Hohlkörpers (2) mit einem Abdeckmaterial, um die Außenwand eines Zylinders (1) für komprimierte Fluide zu definieren;
- Aufbringen auf der Außenfläche des Zylinders (1) für komprimierte Fluide von Identifizierungselementen, die unter Verwendung von elektronischen Geräten sichtbar und/oder rückverfolgbar sind, die die Typenschilddaten des Zylinders (1) zeigen;
- Abdecken der Außenfläche des Zylinders (1) für komprimierte Fluide mit einem Abdeckmaterial, um die Außenwand des Zylinders (1) für komprimierte Fluide zu definieren.

10. Verfahren nach Anspruch 8 oder 9, wobei die Metallformen (10) aus einem Metallmaterial, vorzugsweise einer Legierung auf Zinnbasis, hergestellt sind.

11. Verfahren nach einem der Ansprüche 8 bis 10, wobei das Verbundmaterial einen Faden (300) aus Fasermaterial und einem Harz (400) umfasst.

12. Verfahren nach einem der Ansprüche 8 bis 11, wobei das Fasermaterial einen durchgehenden Faden (300) aus Glasfaser und/oder mindestens einen zwischen Kohlenstoff und/oder Kevlar ausgewählten Faden umfasst.

## Revendications

1. Cylindre (1) pour fluides comprimés à haute pression, comprenant :
- un premier corps creux (2) comportant une ouverture (2a) vers l'extérieur (100) et de manière à définir avec la cavité interne relative un premier espace de logement (2b) pour un fluide comprimé ;
- au moins un second corps creux (3) comportant une ouverture (3a) vers l'extérieur (100) et de manière à définir avec la cavité interne relative un second espace de logement (3b) séparé et différent du premier espace de logement (2b) pour un fluide comprimé ;
dans lequel le second corps creux (3) est logé à l'intérieur du premier corps creux (2) de manière à définir une première chambre (6) servant à loger les fluides comprimés ayant comme espace au moins le premier espace de logement (2b) moins l'espace externe du second corps creux (3) et une seconde chambre (7) servant à loger les fluides comprimés ayant comme espace le second espace de logement (3b), la première chambre de logement (6) étant isolée de la seconde chambre de logement (7) et vice versa,
dans lequel la première chambre de logement (6) et la seconde chambre de logement (7) comportent, respectivement, une ouverture (2a, 3a) vers l'extérieur (100) en correspondance d'une même extrémité de tête (4) du cylindre (1) pour fluides comprimés et **caractérisé en ce qu'**au moins l'un parmi le premier corps creux (2) et le second corps creux (3) comporte, à une extrémité de fond (5) opposée à l'extrémité de tête (4), une ouverture de fond (« C ») réalisée sur le premier corps creux (2) et de manière à ce qu'elle puisse être normalement fermée dans une condition d'utilisation du cylindre (1).

2. Cylindre (1) pour fluides comprimés selon la revendication 1, dans lequel le premier corps creux (2) et le second corps creux (3) sont de forme axisymétrique et sont alignés par rapport à un même axe (« X »).

3. Cylindre (1) pour fluides comprimés selon la revendication 1, dans lequel le premier corps creux (2) et le second corps creux (3) sont reliés à un seul corps de raccordement (8), le corps de raccordement (8) est fixé sur le cylindre (1) pour fluides comprimés en correspondance des ouvertures respectives (2a, 3a) du premier corps creux (2) et du second corps creux (3) vers l'extérieur (100).

4. Cylindre (1) pour fluides comprimés selon la revendication 1, dans lequel au moins l'un des premier (2) et second (3) corps creux est constitué d'un matériau composite, de préférence le matériau composite comprenant un fil (300) de matériau fibreux et une résine (400) .

5. Cylindre (1) pour fluides comprimés selon la revendication 4, dans lequel le matériau fibreux comprend un fil continu (300) de fibre de verre et/ou au moins un fil choisi entre le carbone et/ou le Kevlar.

6. Cylindre (1) pour fluides comprimés selon la revendication 1, dans lequel le premier corps creux (2) et le second corps creux (3) ont une épaisseur de paroi (« S ») étant au moins fonction de la pression maximale du fluide compressible à l'intérieur de la première chambre creuse (6) et de la seconde chambre de logement (7) .

7. Cylindre (1) pour fluides comprimés selon la revendication 3, dans lequel le corps de raccordement (8) comprend en son sein au moins un premier conduit de distribution (82) et un second conduit de distribution (83) comportant des parcours séparés et tels à mettre en communication fluidique, respectivement, la première chambre de logement (6) et la seconde chambre de logement (7) du cylindre (1) avec l'extérieur (100).

8. Procédé de fabrication d'un cylindre (1) pour fluides comprimés à haute pression selon la revendication 1, comprenant :
- préparer au moins deux filières métalliques (10), une première filière métallique étant configurée pour fabriquer le premier corps creux (2), une seconde filière étant configurée pour fabriquer le second corps creux (3), la première filière métallique ayant des dimensions plus grandes que la seconde filière métallique (10) ;
- préparer un métier à filer (200) ;
- fabriquer le second corps creux (3) par filage d'un fil (300) de matériau fibreux autour de la seconde filière métallique (10) ;
- retirer d'une broche (201) du métier à filer (200) la seconde filière métallique (10) recouverte par le second corps creux (3) ;
- préparer une étape de traitement de l'assemblage de la seconde filière métallique (10) et du second corps creux (3), de préférence dans un autoclave, à une température telle qu'elle dépasse le point de fusion du matériau de la seconde filière métallique (10) et pendant une durée prédéterminée suffisante pour polymériser la résine (400) et avec une pression telle qu'elle comprime chaque couche de fil (300) de matière fibreuse imprégnée avec la résine (400) ;
- extraire la seconde filière métallique (10) de la cavité interne du second corps creux (3) à travers une ouverture (3a) relative vers l'extérieur (100) lorsque la seconde filière métallique (10) a adopté l'état liquide ;
- préparer la première filière métallique (10) de préférence fixée axialement sur un corps de raccordement (8) du second corps creux (3) et à l'extérieur du second corps creux (3) ;
- préparer un métier à filer (200) ;
- fabriquer le premier corps creux (2) en filant le fil (300) de matériau fibreux autour de la première filière métallique (10) ;
- retirer de la broche (201) du métier à filer (200) la première filière métallique (10) recouverte par le premier corps creux (2) ;
- préparer une étape de traitement de l'assemblage de la première filière métallique (10), du second corps creux (3) et du premier corps creux (2), de préférence dans un autoclave, à une température telle qu'elle dépasse le point de fusion du matériau de la première filière métallique (10) et pendant une durée prédéterminée suffisante pour polymériser la résine (400) et avec une pression telle qu'elle comprime chaque couche de fil (300) de matériau fibreux imprégné de résine (400) ;
- extraire la première filière métallique (10) de la cavité interne du premier corps creux (2) à travers une ouverture de fond (« C ») vers l'extérieur (100) lorsque la première filière métallique (10) a adopté l'état liquide.

9. Procédé selon la revendication 8, comprenant une ou plusieurs des étapes suivantes :
- recouvrir la surface extérieure de la seconde filière métallique (10) configurée pour la fabrication du second corps creux (3) avec un matériau de recouvrement de manière à définir la paroi intérieure de la cavité de la seconde chambre de logement (7) pour les fluides comprimés ;
- recouvrir la surface extérieure du second corps creux (3) avec un matériau de recouvrement de manière à définir la paroi extérieure du second corps creux (3), avant de fabriquer le second corps creux (2) ;
- monter sur le second corps creux (3) un corps de raccordement (8) en correspondance de l'ouverture (3a) vers l'extérieur (100), de préférence, le corps de raccordement (8) étant vissé sur un collier de raccordement (9) du second corps creux (3) par une extrémité filetée (8c), avant de fabriquer le premier corps creux (2) ;
- recouvrir la surface extérieure de la première filière métallique (10) avec un matériau de recouvrement de manière à définir la paroi intérieure de la cavité de la première chambre de logement (6) pour les fluides comprimés ;
- recouvrir la surface extérieure du premier corps creux (2) avec un matériau de recouvrement de manière à définir la paroi extérieure d'un cylindre (1) pour fluides comprimés ;
- appliquer sur la surface extérieure du cylindre (1) pour fluides comprimés des éléments d'identification étant visibles et/ou traçables en utilisant des dispositifs électroniques indiquant les données de la plaque signalétique du cylindre (1) ;
- recouvrir la surface extérieure du cylindre (1) pour fluides comprimés avec un matériau de recouvrement de sorte à définir la paroi extérieure du cylindre (1) pour fluides comprimés.

10. Procédé selon la revendication 8 ou 9, dans lequel les filières métalliques (10) sont fabriquées à partir d'un matériau métallique, de préférence un alliage à base d'étain.

11. Procédé selon l'une quelconque des revendications 8 à 10, dans lequel le matériau composite comprend un fil (300) de matériau fibreux et une résine (400).

12. Procédé selon l'une quelconque des revendications 8 à 11, dans lequel le matériau fibreux comprend un fil continu (300) de fibre de verre et/ou au moins un fil choisi entre le carbone et/ou le Kevlar.
